# EUROPÄISCHE PATENTSCHRIFT

(11) **EP 2 305 413 B1**
(45) Veröffentlichungstag und Bekanntmachung des Hinweises auf die Patenterteilung: **12.06.2013**
(21) Anmeldenummer: 10179349.5
(22) Anmeldetag: 24.09.2010
(51) Int. Cl.: B23K 11/30, B23K 11/31, B23K 11/36, H01H 11/04

(54) **Schweißeinrichtung mit auswechselbarem Elektrodenkopf**
Welding device with exchangeable electrode head
Dispositif de soudage doté d'une tête d'électrode échangeable

(30) Priorität: 01.10.2009 DE 102009045252
(43) Veröffentlichungstag der Anmeldung: 06.04.2011
(73) Patentinhaber: Otto Bihler Handels-Beteiligungs-GmbH, 87642 Halblech (DE)
(72) Erfinder: Bihler, Mathias, 87642, Halblech (DE); Köpf, Johann, 87642, Halblech (DE)
(74) Vertreter: Tiesmeyer, Johannes

(56) Entgegenhaltungen:
- DE-C2- 2 462 790
- JP-A- 7 308 783
- JP-A- 11 285 855
- JP-A- 56 119 677
- US-B1- 7 022 934

## Beschreibung

Die vorliegende Erfindung betrifft eine Schweißeinrichtung nach dem Oberbegriff des Anspruchs 1.

Eine derartige Schweißeinrichtung ist aus der DE 24 62 790 C2 bekannt. Derartige Schweißeinrichtungen, die auch als Kontaktschweißgeräte bezeichnet werden, kommen bei verschiedensten Kontaktschweißverfahren zum Einsatz, wie etwa Draht-, Profilband-, Plättchen- und Kugelschweißen. Ein besonderes Augenmerk liegt dabei insbesondere auf dem Draht- und Profilbandschweißen, die eine wirtschaftliche Fertigung von gewünschten Bauteilen mit angeschweißten Elementen ermöglichen.

Die bekannten Schweißeinrichtungen haben sich bei der Massenfertigung sehr gut bewährt. Allerdings haben sich die Produktionszyklen für zu fertigende Bauteile stark verändert, insbesondere verkürzt. Dies bedeutet, dass häufig nur noch kleinere Stückzahlen eines bestimmten Produkts hergestellt werden, um nur auf Bedarf und nicht auf Lagerhaltung zu produzieren. Von den Herstellern solcher Produkte wird daher eine große Flexibilität erwartet, so dass sie mit den vorhandenen Maschinen schnell auf Kundenwünsche und unterschiedliche zu fertigende Produkte reagieren können.

Bei den bisher zum Einsatz gekommenen Schweißeinrichtungen hat sich gezeigt, dass die Auswechslung von Elektroden relativ umständlich ist, so dass eine Schweißeinrichtung nur mit relativ hohem Zeitaufwand umgerüstet werden konnte. Ein Auswechseln der Elektroden ist insbesondere auch nach einer bestimmten Lebensdauer bzw. nach einer bestimmten Anzahl Schweißvorgänge erforderlich. Ferner weisen die Elektroden auch unterschiedliche Dimensionen auf, so dass unterschiedlich große Kontaktmetallrohlinge verarbeitet werden können.

Eine weitere, ähnliche Schweißeinrichtung ist aus der JP 11 285855 A bekannt. Bei dieser Schweißeinrichtung wird eine Elektrodenspitze von einem einen Kühlmittelkanal umfassenden Elektrodenspitzenhalter gehalten, der seinerseits auf einen zylindrischen Elektrodenhalter aufgesteckt und mittels einer Schraub-Klemm-Verbindung an diesem befestigt ist. Zum Auswechseln der Elektrodenspitze wird zunächst die Schraub-Klemm-Verbindung gelöst, dann der Elektrodenspitzenhalter von dem zylindrischen Elektrodenhalter gezogen und schließlich die alte Elektrodenspitze herausgenommen und durch eine neue ersetzt. Es ist dabei vorgesehen, dass der Kühlbetrieb des Elektrodenspitzenhalters durch das Auswechseln der Elektrodenspitze nicht unterbrochen wird, da mit dem Kühlmittelkanal des Elektrodenspitzenhalters verbundene, flexible Schläuche nicht von diesem getrennt werden müssen. Eine solche Trennung wäre zwar prinzipiell denkbar, sie wäre aber aufwendig und würde sehr Wahrscheinlich zu einem ungewollten Austritt von Kühlmittel führen.

Der Vollständigkeit halber sei ferner auch noch auf die US 7 022 937 B1, die JP 7 308783 A und die JP 56 119677A verwiesen, welche ebenfalls Schweißeinrichtungen offenbaren.

Aufgabe der Erfindung ist es, eine Schweißeinrichtung der genannten Art derart weiterzubilden, dass ein flexibler Einsatz der Schweißeinrichtung ermöglicht wird, wobei insbesondere auf verkürzte Stillstandzeiten der Schweißeinrichtung bzw. der zugehörigen Arbeitsmaschine, insbesondere Band- oder/und Stanzmaschine geachtet werden soll.

Zur Lösung dieser Aufgabe wird eine Schweißeinrichtung nach Anspruch 1 vorgeschlagen.

Die Elektrode und ihre zugehörige Elektrodenhalterung bilden dabei eine Art Einheit und werden nachfolgend auch als Elektrodenkopf der Schweißeinrichtung gemeinsam angesprochen. Die Elektrode und ihre Elektrodenhalterung können mit wenigen Handgriffen von der Schweißeinrichtung abgenommen und gegen eine nächste Elektrode mit ihrer eigenen Elektrodenhalterung ausgetauscht werden. Es ergibt sich somit ein Schnellwechselsystem für den Elektrodenkopf einer Schweißeinrichtung. Hierdurch kann beim Auswechseln von Elektroden die Betriebsunterbrechung sehr kurz gehalten werden. Zur Auswechslung eines Elektrodenkopfes bzw. einer Elektrode bei einer Schweißeinrichtung des Stands der Technik war bisher mit einem Zeitaufwand und somit einer Betriebsunterbrechung von etwa 30 Minuten zu rechnen. Durch die Abnehmbarkeit der Elektrode gemeinsam mit ihrer Elektrodenhalterung als Elektrodenkopf im Sinne eines Schnellwechselsystems kann ein Wechseln der Elektrode innerhalb weniger Minuten, insbesondere weniger als 10 Minuten erfolgen. Somit muss der Betrieb für eine deutlich kürzere Zeit unterbrochen werden. Dies wirkt sich unmittelbar auf die produzierbare Menge an Werkstücken aus, insbesondere unter der Berücksichtigung, dass mittels einer Biege- oder/und Stanzmaschine mit einer derartigen Schweißeinrichtung Stückzahlen von > 100 pro Minute produziert werden können.

In jedem Rahmenelement sind ein Kühlmittelvorlauf und ein Kühlmittelrücklauf eines jeweiligen Kühlmittelkreislaufs vorgesehen zur Kühlung der zugehörigen Elektrode, wobei die Elektrode oder/und die zugeordnete Elektrodenhalterung derart ausgebildet sind, dass durch Herstellen der mechanischen Verbindung zwischen Elektrodenhalterung und Rahmenelement der betreffende Kühlmittelkreislauf selbsttätig geschlossen wird.

Die Kühlung der Elektroden ist erforderlich, da beim Schweißvorgang sehr hohe Temperaturen herrschen. Zwischen der Elektrodenhalterung und dem den Kühlmittelvorlauf und -rücklauf umfassenden Rahmenelement gibt es gemäß dieser Weiterbildung eine Schnittstelle, welche in der Elektrodenhalterung bzw. der Elektrode verlaufende Leitungsabschnitte mit korrespondierenden Abschnitten des Kühlmittelvorlaufs bzw. -rücklaufs verbindet. Dabei wird die hydraulische und dichte Verbindung und somit das Schließen des Kühlmittelkreislaufs für eine Elektrode automatisch durch das mechanische Anbringen der Elektrodenhalterung am Rahmenelement bewirkt.

An den Kühlmittelkreisläufen ist eine jeweilige oder eine gemeinsame Entleerungseinrichtung vorgesehen, um im Kreislauf befindliches Kühlmittel wenigstens teilweise aus diesem zu entfernen. Dabei können insbesondere der zur Elektrode führende Kühlmittelvorlauf und der von der Elektrode wegführende Rücklauf entleert werden, so dass beim Auswechseln einer Elektrode und damit verbundener Unterbrechung des Kühlmittelkreislaufs im Bereich der Elektrodenaufnahme am Rahmenelement kein oder nur wenig Kühlmittel austritt.

Die Entleerungseinrichtung umfasst wenigstens eine pneumatische Leitung, die durch wenigstens ein Ventil mit einem Kühlmittelvorlauf oder den Kühlmittelvorläufen verbunden ist, derart, dass Druckluft aus einer Druckluftquelle in den Kühlmittelkreislauf gepumpt werden kann.
In diesem Zusammenhang wird vorgeschlagen, dass die Entleerungseinrichtung ein dem Kühlmittelvorlauf zugeordnetes Vorlaufventil umfasst, das beim Entleeren des Kühlmittelkreislaufs geschlossen ist. Ein derartiges Vorlaufventil dient dazu, den Kühlmittelvorlauf auf seiner stromaufwärtigen Seite zu einem Kühlmittelreservoir bzw. einer Kühlmittelpumpe hin schließen zu können. Das oben angesprochene Druckluftventil ist vorzugsweise stromabwärts des Kühlmittelvorlaufventils angeordnet, so dass der bei geschlossenem Vorlaufventil nicht mehr mit Kühlmittel versorgte Kühlmittelvorlauf und der sich daran anschließende Kühlmittelrücklauf mittels der eingeblasenen bzw. hineingepumpten Druckluft im Wesentlichen entleert werden können. Das durch Druckluft aus dem Kühlmittelvorlauf bzw. -rücklauf verdrängte Kühlmittel kann in einem Kühlmittelreservoir des Kühlmittelkreislaufs aufgenommen werden oder ggf. durch ein gesondertes Auslassventil abgelassen werden.

Weiterbildend wird vorgeschlagen, dass die Elektrodenhalterung formschlüssig mit der Elektrodenaufnahme der Rahmenelemente verbindbar oder verbunden ist. Dabei können die Elektrodenhalterung und die Elektrodenaufnahme an den Rahmenelementen derart ausgebildet sein, dass zwischen der Elektrodenhalterung und dem Rahmenelement eine Klemmverbindung herstellbar oder hergestellt ist. Neben einer Klemmverbindung ist es auch denkbar, dass die Elektrodenhalterung mit ihrem Rahmenelement über eine lösbare Schnappverbindung oder dergleichen verbunden sein kann. Vorzugsweise weist die Elektrodenhalterung zwei miteinander verbundene, in ihrem Abstand zueinander verstellbare Führungsleisten auf. Die Führungsleisten können insbesondere plattenartig ausgeführt sein. Hierzu wird ferner vorgeschlagen, dass die Führungsleisten im eingebauten Zustand der Elektrode zwischen sich einen Rahmenabschnitt der Elektrodenaufnahme aufnehmen. Dieser Rahmenabschnitt ist ein mit dem betreffenden Rahmenelement verbundenes Bauteil, das vorzugsweise einstückig mit dem Rahmenelement verbunden ist.

Ferner wird vorgeschlagen, dass die Führungsleisten durch wenigstens einen Bolzen miteinander verbunden sind, wobei der Bolzen im eingebauten Zustand der Elektrode in einer jeweiligen korrespondierenden Öffnung im Rahmenabschnitt aufgenommen ist. Eine derartige Öffnung im Rahmenabschnitt kann als einseitig offenes Langloch ausgebildet sein, so dass beim Aufschieben der beiden Führungsleisten oberhalb und unterhalb des Rahmenabschnitts der wenigstens eine Bolzen in die U-förmige Langlochöffnung von vorne eingeführt werden kann.

Der Bolzen ist vorzugsweise derart ausgebildet, dass er mittels eines an einer der Führungsleisten vorgesehenen Einstellelements, vorzugsweise mittels einer Stellschraube, verstellbar ist, derart, dass der Abstand zwischen den beiden Führungsleisten einstellbar ist, um die Verbindung, vorzugsweise Klemmverbindung, zwischen der Elektrode und dem Rahmenelement, insbesondere dem Rahmenabschnitt herzustellen oder zu lösen. Das Einstellelement wirkt insbesondere derart, dass auf den Bolzen bzw. die Bolzen eine Zugkraft ausgeübt wird, so dass die beiden Führungsleisten zueinander hingezogen werden, wobei sie den zwischen sich aufgenommenen Rahmenabschnitt klemmend beaufschlagen.

Zum Abnehmen bzw. Befestigen einer Elektrode an der Schweißeinrichtung ist es somit lediglich erforderlich, das Einstellelement bzw. die Einstellelemente zu lösen bzw. anzuziehen, um die beiden Führungsleisten in ihrem Abstand zueinander zu verändern, um die Klemmverbindung zu lösen oder herzustellen.

Ein Elektrodenkopf für eine zuvor beschriebenen Schweißeinrichtung mit wenigstens einem der erläuterten Merkmale, kann eine Elektrode und eine damit verbundene Elektrodenhalterung umfassen, wobei die Elektrodenhalterung derart ausgebildet ist, dass sie mit der Schweißeinrichtung verbindbar ist, vorzugsweise unter Herstellung einer Klemmverbindung, und wobei im Elektrodenkopf, insbesondere in einem Teil der Elektrodenhalterung oder/und in der Elektrode Leitungsabschnitte, insbesondere Vorlauf- und Rücklaufabschnitte ausgebildet sind, die mit einem Kühlmittelkreislauf der Schweißeinrichtung selbsttätig koppelbar sind beim mechanischen Verbinden des Elektrodenkopfes mit der Schweißeinrichtung.

Ein derartiger Elektrodenkopf kann in unterschiedlichen Bauformen vorliegen. Insbesondere können an gleichartigen Elektrodenhalterungen unterschiedliche Elektroden vorgesehen sein für unterschiedlich geartete Schweißarbeiten. Ferner können auch die Elektrodenhalterungen in ihrer Dimensionierung unterschiedlich ausgebildet sein, so dass sie für unterschiedlich große Schweißeinrichtungen verwendet werden können. Unterschiedlich dimensionierte Elektrodenhalterungen bzw. Elektroden sind aber alle nach dem oben beschriebenen Konzept ausgestaltet, so dass alle einen schnellen Wechsel der Elektrode mit ihrer Elektrodenhalterung ermöglichen.

Es ist somit auch denkbar, dass für einen bestimmten Typ einer Schweißeinrichtung ein Satz von Elektrodenköpfen bereitgestellt wird, wobei in einem solchen Satz die Elektrodenköpfe in der Regel gleichartige, insbesondere gleich dimensionierte Elektrodenhalterungen aufweisen, an denen jeweils unterschiedliche Elektroden angebracht sind. Selbstverständlich kann auch ein Satz Elektrodenköpfe vorgesehen sein, welcher unterschiedlich dimensionierte Elektrodenhalterungen mit gleichartigen Elektroden oder unterschiedlich ausgestalteten Elektroden aufweist, so dass dieser Satz Elektrodenköpfe mit unterschiedlich großen Schweißeinrichtungen kombinierbar ist. Die Erfindung betrifft ferner eine Arbeitsmaschine, insbesondere Biege- oder/und Stanzmaschine zur Bearbeitung, insbesondere Umformung von durchlaufenden Werkstücken, mit einem auf einem Untergrund stehenden, wandartigen Grundkörper, der eine vordere und eine hintere Bearbeitungsseite aufweist, mit wenigstens einem Werkzeugaggregat zur Bearbeitung der Werkstücke, wobei sie eine Schweißeinrichtung mit wenigstens einem der zuvor beschriebenen Merkmale aufweist und ggf. ferner wenigstens einen zuvor beschriebenen Elektronenkopf.

Schließlich betrifft die Erfindung auch ein Verfahren zum Auswechseln eines Elektrodenkopfes einer Schweißeinrichtung, wobei das Verfahren die folgenden Schritte umfasst: Außer-Betrieb-Nehmen der Schweißeinrichtung, Unterbrechen des Kühlmittelzuflusses in wenigstens einem Kühlmittelkreislauf, der einer auszuwechselnden Elektrode zugeordnet ist, vorzugsweise durch Schließen eines dem Kühlmittelvorlauf zugeordneten Vorlaufventils, Einleiten von Druckluft in den Kühlmittelkreislauf, um restliches Kühlmittel in Richtung Kühlmittelrücklauf zu verdrängen, vorzugsweise durch Öffnen eines dem Vorlaufventil nachgeschalteten Druckluftventils, Stoppen des Einleitens von Druckluft, vorzugsweise durch Schließen des Druckluftventils, Lösen der Verbindung zwischen dem auszuwechselnden Elektrodenkopf und dem zugeordneten Rahmenelement der Schweißeinrichtung, Abnehmen des Elektrodenkopfes von der Schweißeinrichtung, Einsetzen und Befestigen eines Ersatz-Elektrodenkopfes am betreffenden Rahmenelement, Einleiten von Kühlmittel in den Kühlmittelkreislauf und Wiederaufnahme des Betriebs der Schweißeinrichtung.

Ein derartiges Verfahren ermöglicht ein sehr schnelles Auswechseln von Elektroden mit ihren Elektrodenhalterungen, so dass Standzeiten der Schweißeinrichtung bzw. einer Arbeitsmaschine mit einer solchen Schweißeinrichtung auf ein Minimum beschränkt werden können.

Nachfolgend wir die Erfindung beispielhaft und nicht einschränkend unter Bezugnahme auf die anliegenden Figuren anhand verschiedener Ausführungsformen beschrieben.
- Fig. 1: zeigt eine schematische Seitenansicht einer Ausführungsform einer erfindungsgemäßen Schweißeinrichtung.
- Fig. 2: zeigt in vergrößerter schematischer Perspektivdarstellung die Schweißeinrichtung der Fig. 1.
- Fig. 3: zeigt die Schweißeinrichtung der Fig. 2 mit abgenommenen Elektrodenköpfen.
- Fig. 4: ist eine Teilschnittdarstellung des vorderen Bereichs der Schweißeinrichtung mit den Elektrodenköpfen entsprechend der Schnittlinie IV - IV der Fig. 2.
- Fig. 5: ist eine weitere Schnittdarstellung entsprechend der Schnittlinie V-V der Fig. 4.
- Fig. 6: ist eine Schnittansicht entsprechend der Schnittlinie VI - VI der Fig. 1 bzw. Fig. 4.
- Fig. 7: ist eine schematische Perspektivdarstellung einer anderen Aus- führungsform der Schweißeinrichtung.
- Fig. 8: ist eine weitere Ausführungsform der Schweißeinrichtung.

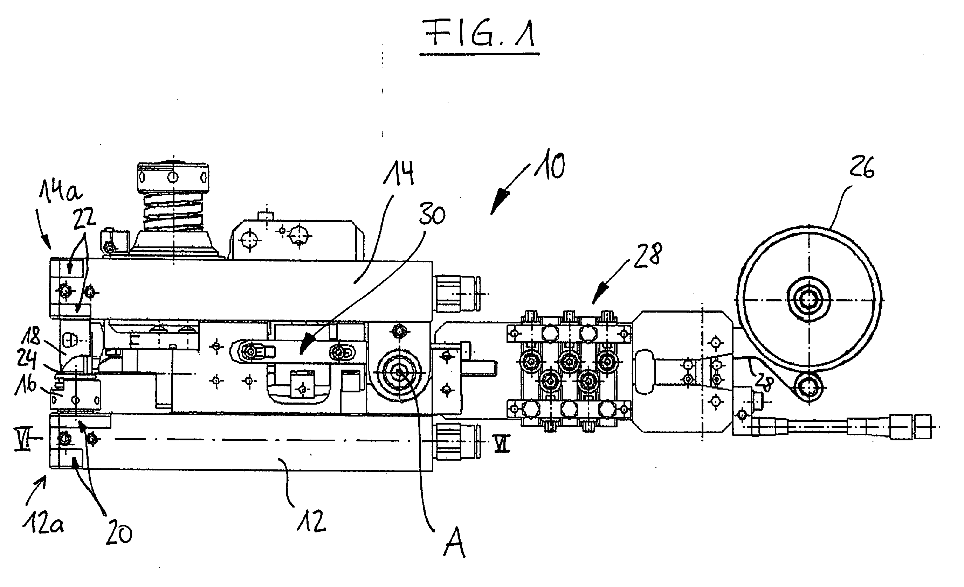

In Fig. 1 ist in schematischer Seitenansicht eine Schweißeinrichtung bzw. ein Schweißgerät 10 dargestellt. Dieses Schweißgerät 10 umfasst als Rahmenelemente einen ortsfesten Schweißarm 12 und einen um eine zur Zeichenebene der Fig. 1 orthogonale Schwenkachse A relativ zum ortsfesten Schweißarm 12 verschwenkbaren beweglichen Schweißarm 14. Die Schweißarme 12 und 14 weisen an ihren vorderen Längsenden 12a und 14a Schweißelektroden 16 und 18 auf. Diese Schweißelektroden 16, 18 sind mittels jeweiliger Elektrodenhalterungen 20, 22 mit dem betreffenden Schweißarm 12, 14 verbunden. Zwischen den Schweißelektroden 16, 18 ist ein Schweißspalt 24 vorgesehen.

In den Schweißspalt 24 wird ein auf einen nicht dargestellten Träger aufzuschweißendes Kontaktmetall zugeführt, wobei anzuschweißende Kontaktmetallrohlinge vorzugsweise von einem Draht oder Band abgetrennt werden. Aus der Fig. 1 ist eine Drahtrolle 26 ersichtlich, von welcher ein zur Herstellung von Kontaktmetallrohlingen dienender Draht 28 dem Schweißgerät 10 zugeführt wird. Hierzu umfasst das Schweißgerät 10 ferner Einrichtungen zur Band- bzw. Drahtkontrolle und zum Einzug des Drahtes bzw. Bandes, was durch das Bezugszeichen 28 angedeutet ist. Ferner umfasst das Schweißgerät 10 eine Transportvorrichtung 30, welche den Draht 28 um eine gewünschte Länge in Richtung der Schweißelektroden 16, 18 transportiert und dann während des Schweißvorgangs den Draht 28 festhält. Das Schweißgerät 10 wird über einen motorischen Antrieb angetrieben, wobei auf die Details des Antriebs bzw. der im Schweißgerät 10 vorgesehenen Übertragungswege zum Antreiben von Transport, Einzug und dergleichen nicht näher eingegangen wird. Sowohl die Einzugsvorrichtung 28 als auch die Transportvorrichtung 30 und der zugehörige Antrieb, der auch die Schwenkbewegung des beweglichen Schwenkarms 14 hervorruft, sind hinlänglich bekannt. Es wird diesbezüglich beispielhaft auf die bereits erwähnte DE 24 62 790 C2 verwiesen.

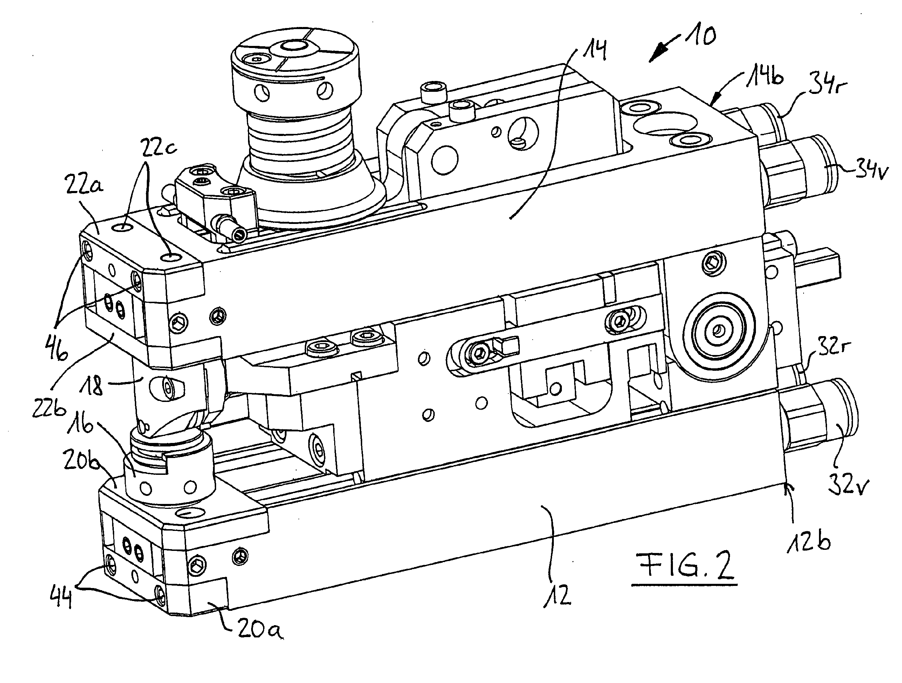

Fig. 2 zeigt in perspektivischer Darstellung den vorderen Teil des Schweißgeräts 10 in vergrößerter Darstellung. Am rückseitigen Längsende 12b, 14b sind für jeden Schweißarm 12, 14 Anschlussstücke für einen Kühlmittelvorlauf 32v, 34v und einen Kühlmittelrücklauf 32r, 34r ersichtlich. Kühlmittel, das durch einen Kühlmittelvorlauf 32v, 34v zum Schweißarm 12, 14 geführt wird, strömt entlang einer im Schwenkarm 12, 14 ausgebildeten Kühlmittelleitung in Richtung der Elektrodenhalterung 20, 22. Das Kühlmittel gelangt dann über ein noch später zu beschreibendes Leitungssystem in den Bereich der Elektroden 16, 18, um diese im Betrieb wirksam kühlen zu können. Das Kühlmittel verlässt den jeweiligen Schweißarm 12, 14 durch eine nicht dargestellte Kühlmittelrücklaufleitung, welche im Bereich des rückseitigen Anschlusses bei 32r, 34r wieder aus dem Schweißarm 12, 14 austritt.

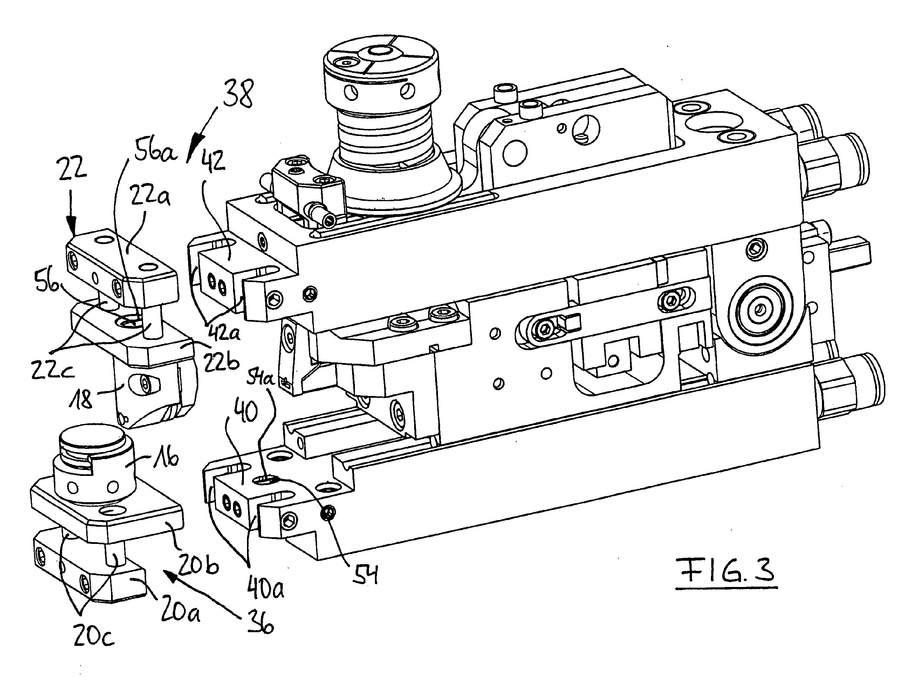

Die Schweißelektroden 16, 18 sind mit ihren jeweiligen Elektrodenhalterungen 20, 22 derart verbunden, dass sie gemeinsam in der Art einer Einheit als sogenannter Elektrodenkopf 36 bzw. 38 vom jeweiligen Schweißarm 12, 14 abgenommen werden können. Eine derartige Situation ist beispielhaft in der Fig. 3 dargestellt. Aus dieser Figur ist ferner ersichtlich, dass die Elektrodenhalterungen 20 bzw. 22 jeweils zwei plattenartig ausgebildete Führungsleisten 20a, 20b bzw. 22a, 22b aufweisen, die über jeweils zwei Bolzen 20c bzw. 22c miteinander verbunden sind. Im angebrachten Zustand der Elektrodenköpfe 36, 38 am jeweiligen Schweißarm 12, 14 liegen die plattenartigen Führungsleisten 20a, 20b bzw. 22a, 22b oben und unten an jeweiligen Rahmenabschnitten 40, 42 der Schweißarme 12, 14 an. In diesen Rahmenabschnitten 40, 42 sind im Wesentlichen U-förmige Ausnehmungen 40a bzw. 42a vorgesehen, in welchen die Bolzen 20c bzw. 22c aufgenommen werden können. Die Rahmenabschnitte 40, 42 sind somit im zusammengebauten Zustand zwischen den jeweiligen Führungsleisten 20a, 20b bzw. 22a, 22b aufgenommen.

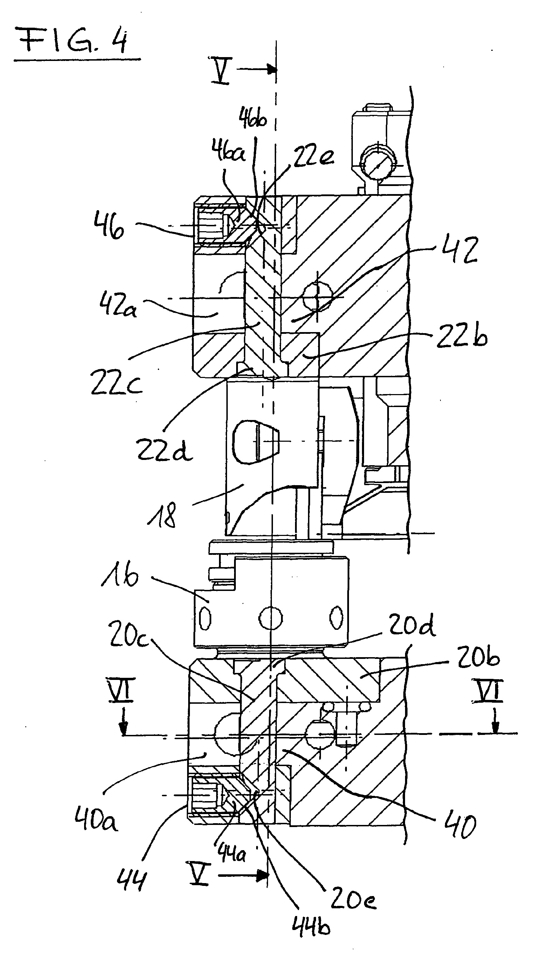

Die Befestigung der Elektrodenköpfe 36, 38 mittels der jeweiligen Elektrodenhalterungen 20, 22 wird nun anhand der Schnittansicht der Fig. 4 erklärt. Aus der Schnittdarstellung ist ersichtlich, dass die Bolzen 20c bzw. 22c an ihrem elektrodenseitigen Ende einen Bolzenkopf 20d bzw. 22d aufweisen, der in einer jeweiligen Öffnung der Führungsleisten 20b bzw. 22b aufgenommen ist. Wie bereits erwähnt, erstrecken sich die Bolzen 20c bzw. 22c in im Wesentlichen vertikaler Richtung durch die Ausnehmungen 40a bzw. 42a der Rahmenabschnitte 40 bzw. 42. An ihren von den Elektroden 16, 18 abgewandten Endbereichen weisen die Bolzen 20c, 22c in radialer Richtung ausgebildete Einkerbungen 20e bzw. 22e auf, die zu einer in den jeweiligen Führungsleisten 20a bzw. 22a ausgebildeten Bohrung 44 bzw. 46 ausgerichtet werden können bzw. sind. In die Bohrungen 44, 46 sind jeweilige Stellschrauben 44a bzw. 46a eingesetzt, die ein vorderes, konusartiges Ende 44b bzw. 46b aufweisen. Durch Einschrauben der Stellschrauben 44a, 46a in ihre jeweiligen Bohrungen 44, 46 kommen diese Stellschrauben mit ihren konischen Enden 44b, 46b in Kontakt mit den radial ausgebildeten Ausnehmungen 20e, 22e der Bolzen 20c bzw. 22c. Aufgrund der geneigten Kontaktflächen zwischen den Einstellschrauben 44, 46 und den Bolzen 20c, 22c können durch Anziehen der Stellschrauben 44a, 46a bzw. durch Lösen derselben die Bolzen 20c, 22c in vertikaler Richtung relativ zu den Rahmenabschnitten 40, 42 bewegt werden. Beim Anziehen der Stellschrauben 44a, 46a werden die Bolzen 20c, 22c auf Zug belastet, so dass die jeweiligen Führungsleisten 20a, 20b bzw. 22a, 22b zueinander hingezogen werden, wobei sie dann den jeweiligen Rahmenabschnitt 40, 42 klemmend zwischen sich aufnehmen. Die Elektrodenhalterungen 20 bzw. 22 können somit durch einfaches Lösen bzw. Anziehen von jeweils zwei Einstellschrauben 44a bzw. 46a (Fig. 2, 3) am Schweißgerät 10 angebracht oder von diesem abgenommen werden. Somit können die gesamten Elektrodenköpfe aus Elektroden 16 bzw. 18 und Elektrodenhalterungen 20 bzw. 22 in einem Stück vom Rest der ansonsten zusammengebaut gelassenen Schweißeinrichtung 10 abgenommen bzw. an dieser befestigt werden. Hierdurch ergibt sich in vorteilhafter Weise ein Schnellwechselsystem für derartige Elektrodenköpfe 36, 38. Die schnelle Befestigung bzw. das Lösen von Elektrodenköpfen kann auch durch anders ausgebildete Verschlüsse bzw. Feststelleinrichtungen erreicht werden, wie etwa lösbare Rasten, Klinken oder dergleichen. Natürlich kann auch nur ein Bolzen mit einer Einstellschraube vorgesehen sein.

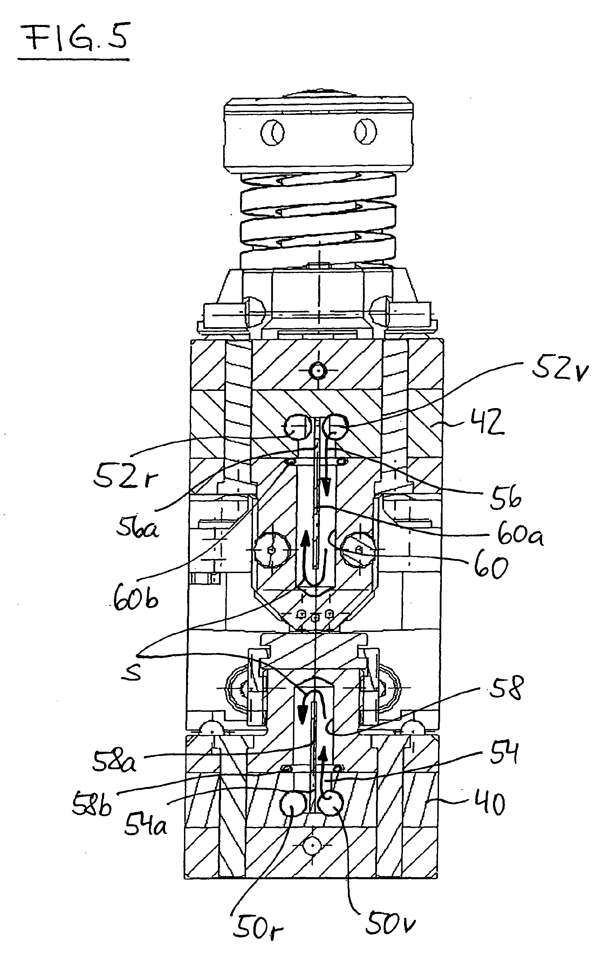

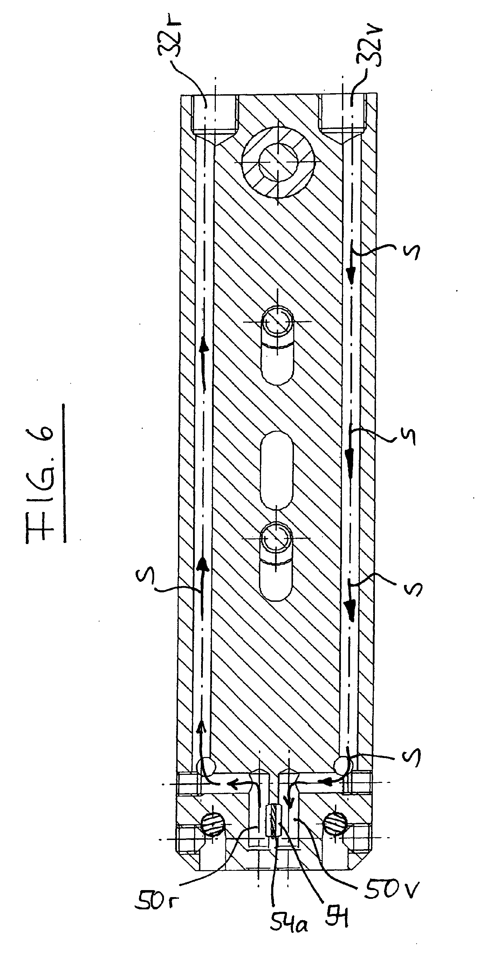

Beim mechanischen Anbringen der Elektrodenköpfe 36, 38 am jeweiligen Schweißarm 12, 14 bzw. dem zugehörigen Rahmenabschnitt 40, 42 wird auch der betreffende Kühlmittelkreislauf selbsttätig geschlossen. Dies wird nachfolgend unter Bezugnahme auf die beiden Schnittdarstellungen der Fig. 5 und 6 erläutert.

Fig. 5 zeigt eine Schnittansicht entsprechend der Linie V - V der Fig. 4. In dieser Schnittdarstellung sind die bereits beschriebenen Elemente mit den gleichen Bezugszeichen bezeichnet und es wird nicht mehr näher auf diese Elemente eingegangen. Die Rahmenabschnitte 40, 42 weisen nach außen hin abgedichtete Leitungsabschnitte 50r, 50v bzw. 52r, 52v auf, welche mit den bereits unter Bezugnahme auf Fig. 2 dargestellten Kühlmittelvorlaufanschlüssen 32v, 34v bzw. Kühlmittelrücklaufanschlüssen 32r, 34r in Verbindung stehen. Diese Leitungsabschnitte 50v, r bzw. 52v, r stehen in Verbindung mit einem im Wesentlichen vertikalen Leitungsabschnitt 54 bzw. 56, welcher durch eine jeweilige Trennwand 54a bzw. 56a Kühlmittelvorlauf und -rücklauf voneinander trennt. In der Perspektivansicht der Fig. 3 ist ersichtlich, dass der vertikale Leitungsabschnitt 54 im Wesentlichen halbkreisförmige Leitungen umfasst, die jeweils dem Vorlauf bzw. Rücklauf zugeordnet sind und durch die Trennwand 54a voneinander getrennt sind.

Wenn ein Elektrodenkopf 36, 38 mit seinem jeweiligen Rahmenabschnitt 40, 42 mechanisch verbunden wird, fluchtet eine in der Ventilhalterung 20 bzw. 22 oder/und der Elektrode 16, 18 ausgebildete Bohrung 58 bzw. 60 mit dem vertikalen Leitungsabschnitt 54 bzw. 56. In den Bohrungen 58, 60 sind ebenfalls Trennwände 58a bzw. 60a vorgesehen, um Kühlmittelvorlauf und -rücklauf über einen Großteil der Länge der jeweiligen Bohrung 58, 60 zu trennen. Die Trennwände 58a bzw. 60a stellen eine Verlängerung der Trennwände 54a bzw. 56a der Leitungsabschnitte 54, 56 in den Rahmenabschnitten 40, 42 dar. Zwischen den Leitungsabschnitten 54, 56 und den Bohrungen 58, 60 ist eine jeweilige Ringdichtung 58b bzw. 60b vorgesehen, um eine dichte Verbindung zwischen Halterung 20, 22 und Rahmenabschnitt 40 bzw. 42 zu ermöglichen. Durch die vorgestellte Konstruktion von Rahmenabschnitten 40, 42 und der Elektrodenhalterungen 20, 22 bzw. Elektroden 16, 18 (Elektrodenköpfe 36, 38) wird beim mechanischen Verbinden der Elektrodenköpfe am jeweiligen Schweißarm 12, 14 auch der fluiddichte Anschluss an die in den Schweißarmen 12, 14 vorgesehenen Kühlmittelleitungen 50r, v und 52r, v ermöglicht.

Kühlmittel, das beispielsweise im unteren Schweißarm 12 strömt, gelangt über den Kühlmittelvorlaufanschluss 32v (Fig. 6) zum Leitungsabschnitt 50v im Rahmenabschnitt 40. Von dort steigt das Kühlmittel im Leitungsabschnitt 54 und der Bohrung 58 bezogen auf die Zeichnungsebene der Fig. 5 rechten Seite der Trennwand 58a nach oben, um oberhalb der Trennwand 58a wieder nach unten in der Bohrung 58 in Richtung des Leitungsabschnitts 50r zu fließen, welcher dem Kühlmittelrücklauf zugeordnet ist. Das Strömen von Kühlmittel ist in den Fig. 5 und 6 durch einige mit s bezeichnete Pfeile angedeutet. Das beispielhaft für den unteren Schweißarm 12 vorgestellte Leitungsprinzip für Kühlmittel ist auch im oberen, beweglichen Schweißarm 14 umgesetzt.

Da durch das Abnehmen von Elektrodenköpfen 36, 38 von der Schweißeinrichtung 10 die Kühlmittelkreisläufe (32r, v; 50r, v bzw. 34r, v; 52r, v) geöffnet werden, ist es vorteilhaft, gemäß der Erfindung, wenn vor dem Auswechseln eines Elektrodenkopfs 36, 38 die Zufuhr von Kühlmittel unterbrochen werden kann. Dies kann beispielsweise dadurch erreicht werden, dass der Kühlmittelzufluss für den betreffenden Schweißarm 12, 14 mittels eines Kühlmittelvorlaufventils (nicht dargestellt) verschlossen wird. Anschließend wird über ein mit dem Kühlmittelvorlauf 32v bzw. 34v verbundene, gemäß der Erfindung, Druckluftventil (nicht dargestellt) Druckluft in das Kühlmittelleitungssystem geblasen, so dass noch im Leitungssystem befindliches Kühlmittel durch die Druckluft in Richtung Kühlmittelrücklaufanschluss 32r bzw. 34r verdrängt wird. Das verdrängte Kühlmittel kann beispielsweise in einem Kühlmittelreservoir, das üblicherweise mit dem entsprechenden Kühlmittelrücklauf 32r bzw. 34r verbunden ist, aufgefangen werden. Sobald das restliche Kühlmittel aus den in den Schweißarmen 12, 14 vorhandenen Kühlmittelleitungen verdrängt worden ist, kann, vorzugsweise nach Stoppen der Druckluftzufuhr, ein betreffender Elektrodenkopf 36, 38 durch Lösen der jeweiligen Einstellschrauben 44a bzw. 46a vom Schweißgerät 10 abgenommen und ausgewechselt werden. Da die Kühlmittelleitungen des betreffenden Schweißarms 12, 14 im Wesentlichen leer sind, spritzt aus den nunmehr geöffneten Leitungsabschnitten 54 bzw. 56 kein Kühlmittel.

Alternativ zu einem vorgängigen Ausblasen von Kühlmittelleitungen könnte im Bereich des Übergangs zwischen den Leitungsabschnitten 54, 56 und den Bohrungen 58, 60 auch ein selbsttätig schließender Verschlussmechanismus vorgesehen sein. Ein derartiger Verschlussmechanismus könnte so ausgestaltet sein, dass beim mechanischen Verbinden eines betreffenden Elektrodenkopfs 36, 38 die Fluidverbindung zwischen den Leitungsabschnitten 54, 56 und den Bohrungen 58, 60 hergestellt wird. Beim Abnehmen eines Elektrodenkopfs 36, 38 würde sich ein solcher Verschlussmechanismus automatisch schließen, so dass im Kühlmittelkreislauf befindliches Kühlmittel weiter strömen kann, ohne dass aber Kühlmittel bei den Leitungsabschnitten 54 bzw. 56 aus dem Schweißgerät 10 austreten kann.

In den Fig. 1 bis 6 wurde ein Schnellwechselsystem für ein Schweißgerät 10 beschrieben, wobei es sich bei diesem Schweißgerät 10 um ein sogenanntes "Schweißgerät mit Messerschnitt" handelt, bei welchem ein zu verschweißender Draht durch ein Messer abgeschnitten wird, bevor der Kontaktmetallrohling mittels der Elektroden 16, 18 mit einem Träger verschweißt wird.

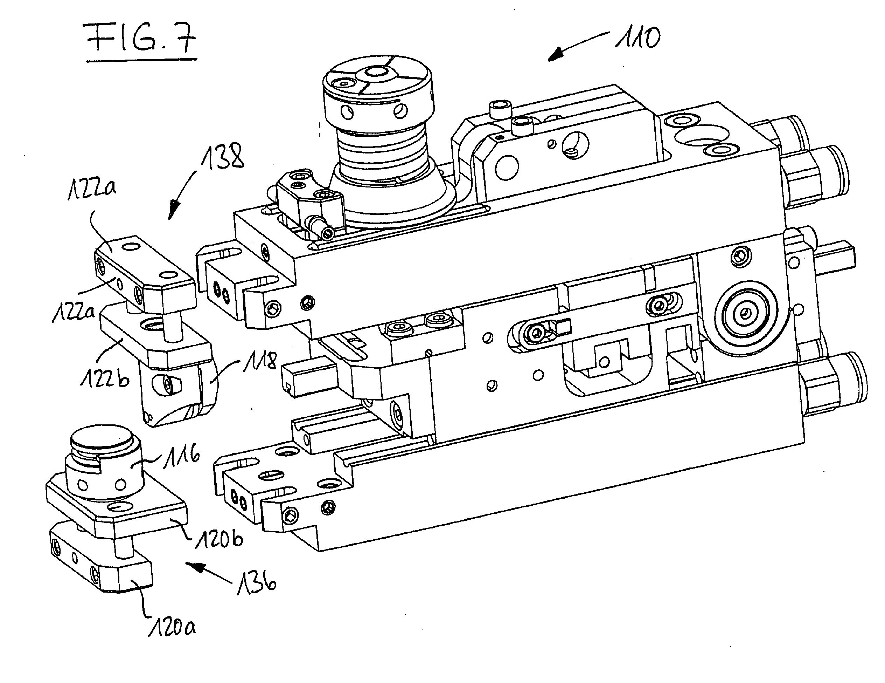

Fig. 7 zeigt eine andere Ausführungsform eines Schweißgeräts 110, bei welchem ebenfalls auswechselbare Elektrodenköpfe 136, 138 vorgesehen sind. Es handelt sich bei diesem Schweißgerät 110 allerdings um ein Schweißgerät, bei welchem die Elektrode 118 selbst als Schneidwerkzeug zum Abtrennen eines Kontaktmetallrohlings von einem Drahtstrang verwendet wird. Derartige Schweißgeräte 110 sind auch unter dem Begriff "Schweißgerät mit Elektrodenschnitt" bekannt.

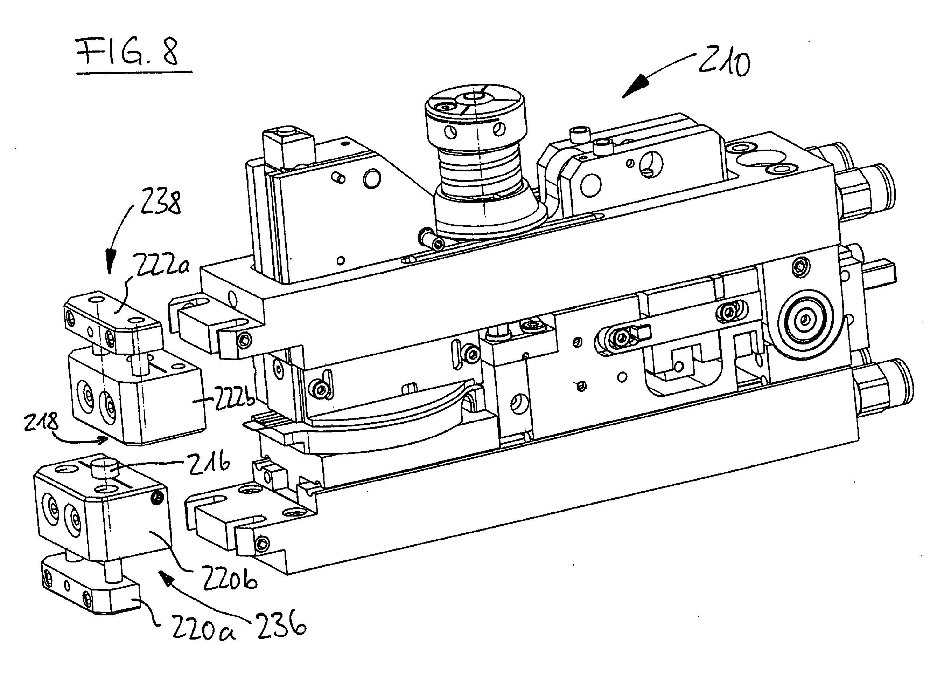

Schließlich wird noch auf ein Schweißgerät 210 gemäß Fig. 8 hingewiesen, einem Schweißgerät mit Kontakttransport. Wie aus der Fig. 8 ersichtlich, weisen hier die Elektroden 216 bzw. 218 eine andere Form und Dimensionierung auf als die bereits vorgestellten Elektroden 16, 116, 18, 118 der vorherigen Figuren. Entsprechend sind auch die Führungsleisten 220a, b bzw. 222a, b etwas anders ausgebildet und dimensioniert. Diese Änderungen bei der Formgebung bzw. Dimensionierung der Elektrodenköpfe 236, 238 ändern aber nichts am erfindungsgemäßen Prinzip, dass die Elektrodenköpfe 236, 238 wie die zuvor beschriebenen Elektrodenköpfe 36, 38 und 136, 138 einfach und schnell vom Schweißgerät 10 abgenommen werden können und ggf. ausgetauscht werden können.

Aus den verschiedenen Ausführungsbeispielen wird somit ersichtlich, dass das erfindungsgemäße Prinzip von schnell auswechselbaren Elektrodenköpfen auf unterschiedliche Schweißgeräte 10, 110, 210 anwendbar ist, unabhängig davon, welche spezifische Art der Schweißung mittels des betreffenden Schweißgeräts durchgeführt werden soll.

## Patentansprüche

1. Schweißeinrichtung für eine Arbeitsmaschine, insbesondere Stanz- oder/und Biegemaschine zum Bestücken von Trägerteilen mit Kontaktmetall durch Anschweißen von Kontaktmetallrohlingen, die von einem Bandmaterial, insbesondere Draht (28) abgetrennt sind, umfassend:
- einen Grundrahmen,
- ein Elektrodenpaar (16, 18; 116, 118; 216, 218) mit einer zwischen einer Aufnahmestellung und einer Schweißstellung relativ zu einer zweiten Elektrode (16; 116; 216) bewegbaren ersten Elektrode (18; 118; 218), wobei die erste und die zweite Elektrode (16, 18; 116, 118; 216, 218) an jeweiligen ersten und zweiten zangenartigen Rahmenelementen (12, 14) angeordnet sind, die relativ zueinander beweglich, insbesondere verschwenkbar sind, und
- eine Kontaktmetallzuführung mit einer Vorschubeinrichtung (28, 30) zur Zuführung von Kontaktmetallrohlingen zu dem Elektrodenpaar (16, 18; 116, 118; 216, 218),
wobei in jedem Rahmenelement (12, 14) ein Kühlmittelvorlauf (32v, 34v, 50v, 52v) und ein Kühlmittelrücklauf (32r, 34r, 50r, 52r) eines jeweiligen Kühlmittelkreislaufs vorgesehen sind zur Kühlung der zugehörigen Elektrode (16, 18; 116, 118; 216, 218),
**dadurch gekennzeichnet, dass**
wenigstens eine der Elektroden (16, 18; 116, 118; 216, 218), vorzugsweise beide Elektroden, mittels einer jeweiligen Elektrodenhalterung (20, 22) derart mit einer Elektrodenaufnahme ihres jeweiligen Rahmenelements (12, 14) lösbar verbunden sind, dass die Elektrodenhalterung (20, 22) mit der Elektrode (16,18; 116, 118; 216, 218) bei unterbrochenem Betrieb der Schweißeinrichtung von der im Übrigen zusammengebaut belassenen, vorzugsweise an der Stanz- oder/und Biegemaschine befestigten Schweißeinrichtung abnehmbar ist,
wobei die Elektrode oder/und die zugeordnete Elektrodenhalterung (20, 22) derart ausgebildet sind, dass durch Herstellen der mechanischen Verbindung zwischen Elektrodenhalterung (20, 22) und Rahmenelement (12, 14) der betreffende Kühlmittelkreislauf selbsttätig geschlossen wird,
wobei an den Kühlmittelkreisläufen eine jeweilige oder gemeinsame Entleerungseinrichtung vorgesehen ist, um im Kreislauf befindliches Kühlmittel wenigstens teilweise aus diesem zu entfernen, und wobei die Entleerungseinrichtung wenigstens eine pneumatische Leitung umfasst, die durch wenigstens ein Ventil mit einem Kühlmittelvorlauf oder den Kühlmittelvorläufen verbunden ist, derart, dass Druckluft aus einer Druckluftquelle in den Kühlmittelkreislauf gepumpt werden kann.

2. Schweißeinrichtung nach Anspruch 1, **dadurch gekennzeichnet, dass** die Entleerungseinrichtung ferner ein dem Kühlmittelvorlauf zugeordnetes Vorlaufventil umfasst, das beim Entleeren des Kühlmittelkreislaüfes geschlossen ist.

3. Schweißeinrichtung nach einem der vorhergehenden Ansprüche,
**dadurch gekennzeichnet, dass** die Elektrodenhalterung (20, 22) formschlüssig mit der Elektrodenaufnahme der Rahmenelemente (12, 14) verbindbar oder verbunden ist.

4. Schweißeinrichtung nach Anspruch 3, **dadurch gekennzeichnet, dass** die Elektrodenhalterung (20, 22) und die Elektrodenaufnahme an den Rahmenelementen (12, 14) derart ausgebildet sind, dass zwischen der Elektrodenhalterung (20, 22) und dem Rahmenelement (12, 14) eine Klemmverbindung herstellbar oder hergestellt ist.

5. Schweißeinrichtung nach einem der vorhergehenden Ansprüche,
**dadurch gekennzeichnet, dass** die Elektrodenhalterung (20, 22) zwei miteinander verbundene, in ihrem Abstand zueinander verstellbare Führungsleisten (20a, b, 22a, b; 120a, b, 122a, b; 220a, b, 222a, b) aufweist.

6. Schweißeinrichtung nach Anspruch 5, **dadurch gekennzeichnet, dass** die Führungsleisten (20a, b, 22a, b; 120a, b, 122a, b; 220a, b, 222a, b) im eingebauten Zustand der Elektrode zwischen sich einen Rahmenabschnitt (40, 42) der Elektrodenaufnahme aufnehmen.

7. Schweißeinrichtung nach Anspruch 6, **dadurch gekennzeichnet, dass** die Führungsleisten (20a, b, 22a, b) durch wenigstens einen Bolzen (20c, 22c) miteinander verbunden sind, wobei der Bolzen (20c, 22c) im eingebauten Zustand der Elektrode in einer jeweiligen korrespondierenden Öffnung (40a, 42a) im Rahmenabschnitt (40, 42) aufgenommen ist.

8. Schweißeinrichtung nach Anspruch 7, **dadurch gekennzeichnet, dass** der Bolzen (20c, 22c) derart ausgebildet ist, dass er mittels eines an einer der Führungsleisten (20a, 22a) vorgesehenen Einstellelements (44, 46), vorzugsweise mittels einer Stellschraube, verstellbar ist, derart, dass der Abstand zwischen den beiden Führungsleisten (20a, b, 22a, b) einstellbar ist, um die Verbindung, vorzugsweise Klemmverbindung, zwischen der Elektrode (16, 18) und dem Rahmenelement (12, 14), insbesondere dem Rahmenabschnitt (40, 42) herzustellen oder zu lösen.

9. Arbeitsmaschine, insbesondere Biege- oder/und Stanzmaschine zur Bearbeitung, insbesondere Umformung von durchlaufenden Werkstücken, mit einem auf einem Untergrund stehenden, wandartigen Grundkörper, der eine vordere und eine hintere Bearbeitungsseite aufweist, mit wenigstens einem Werkzeugaggregat zur Bearbeitung der Werkstücke, **gekennzeichnet durch** eine Schweißeinrichtung (10; 110; 210) nach einem der vorhergehenden Ansprüche.

10. Verfahren zum Auswechseln eines Elektrodenkopfes einer Schweißeinrichtung nach einem der Ansprüche 1 bis 8, wobei der Elektrodenkopf eine Elektrode (16, 18; 116, 118; 216, 218) und eine damit verbundene Elektrodenhalterung (20, 22) umfasst, wobei die Elektrodenhalterung (20, 22) derart ausgebildet ist, dass sie mit der Schweißeinrichtung verbindbar ist, vorzugsweise unter Herstellung einer Klemmverbindung, und wobei im Elektrodenkopf (36, 38; 136, 138; 236, 238), insbesondere in einem Teil der Elektrodenhalterung (20, 22) oder/und in der Elektrode (16, 18; 116, 118; 216, 218) Leitungsabschnitte, insbesondere Vorlauf- und Rücklaufabschnitte (54, 56) ausgebildet sind, die mit einem Kühlmittelkreislauf (32v, r, 34v, r, 50v, r, 52v, r) der Schweißeinrichtung selbsttätig koppelbar sind beim mechanischen Verbinden des Elektrodenkopfes (36, 38; 136, 138; 236, 238) mit der Schweißeinrichtung,
wobei das Verfahren die folgenden Schritte umfasst:
- Ausser-Betrieb-Nehmen der Schweißeinrichtung,
- Unterbrechen des Kühlmittelzuflusses in wenigstens einem Kühlmittelkreislauf, der einer auszuwechselnden Elektrode zugeordnet ist, durch Schließen eines dem Kühlmittelvorlauf zugeordneten Vorlaufventils,
- Einleiten von Druckluft in den Kühlmittelkreislauf, um restliches Kühlmittel in Richtung Kühlmittelrücklauf zu verdrängen, durch Öffnen eines dem Vorlaufventil nachgeschalteten Druckluftventils,
- Stoppen des Einleitens von Druckluft, durch Schließen des Druckluftventils,
- Lösen der Verbindung zwischen dem auszuwechselnden Elektrodenkopf und dem zugeordneten Rahmenelement der Schweißeinrichtung,
- Abnehmen des Elektrodenkopfes von der Schweißeinrichtung,
- Einsetzen und Befestigen eines Ersatz-Elektrodenkopfes am betreffenden Rahmenelement,
- Einleiten von Kühlmittel in den Kühlmittelkreislauf,
- Wiederaufnahme des Betriebs der Schweißeinrichtung.

## Claims

1. Welding device for a processing machine, in particular a punching and/or bending machine for fitting carrier parts with contact metal by welding on contact metal blanks that are cut off from a band material, in particular wire (28), comprising:
- a base frame,
- an electrode pair (16, 18; 116, 118; 216, 218) with a first electrode (18; 118; 218) movable between a mounting position and a welding position relative to a second electrode (16; 116; 216), wherein the first and second electrode (16, 18; 116, 118; 216, 218) are arranged on respective first and second tong-like frame elements (12, 14) that can be moved relative to one another, in particular are pivotable relative to each other, and
- a contact metal supply with a feed device (28, 30) for supplying contact metal blanks to the electrode pair (16, 18; 116, 118; 216, 218),
wherein in each frame element (12, 14) a coolant forward flow (32v, 34v, 50v, 52v) and a coolant backward flow (32r, 34r, 50r, 52r) of a respective coolant circuit are provided for cooling the associated electrode (16, 18; 116,118; 216, 218),
**characterised in that**
at least one of the electrodes (16, 18; 116,118; 216, 218), preferably both electrodes, are connected detachably by means of a respective electrode holder (20, 22) with an electrode mount of their respective frame element (12, 14) such that the electrode holder (20, 22) with the electrode (16, 18; 116,118; 216, 218) can be removed during uninterrupted operation of the welding device from the welding device otherwise left assembled and preferably secured to the punching and/or bending machine,
wherein the electrode and/or the assigned electrode holder (20, 22) are designed such that by producing the mechanical connection between the electrode holder (20, 22) and frame element (12, 14) the relevant coolant circuit is closed automatically,
wherein in the coolant circuits a respective or common emptying device is provided in order to remove coolant in the circuit from the latter at least partly, and wherein the emptying device comprises at least one pneumatic line, which is connected by at least one valve to a coolant forward flow or coolant forward flows, such that compressed air can be pumped out of a compressed air source into the coolant circuit.

2. Welding device according to claim 1, **characterised in that** the emptying device also comprises a forward valve assigned to the coolant forward flow which is closed on emptying the coolant circuit.

3. Welding device according to one of the preceding claims, **characterised in that** the electrode holder (20, 22) can be connected or is connected with a positive fit with the electrode mount of the frame elements (12,14).

4. Welding device according to claim 3, **characterised in that** the electrode holder (20, 22) and the electrode mount are formed on the frame elements (12, 14) such that between the electrode holder (20, 22) and the frame element (12, 14) a clamping connection can be produced or is produced.

5. Welding device according to one of the preceding claims, **characterised in that** the electrode holder (20, 22) comprises two guiding strips (20a, b, 22a, b; 120a, b, 122a, b; 220a, b, 222a, b) connected together and adjustable in their spacing from one another.

6. Welding device according to claim 5, **characterised in that** the guiding strips (20a, b, 22a, b; 120a, b, 122a, b; 220a, b, 222a, b) in the installed state of the electrode mount between them a frame section (40, 42) of the electrode mount.

7. Welding device according to claim 6, **characterised in that** the guiding strips (20a, b, 22a, b) are connected together by at least one bolt (20c, 22c), wherein the bolt (20c, 22c) in the installed state of the electrode is mounted in a respective corresponding opening (40a, 42a) in the frame section (40, 42).

8. Welding device according to claim 7, **characterised in that** the bolt (20c, 22c) is configured such that it can be adjusted by means of an adjusting element (44, 46) provided on one of the guiding strips (20a, 22a), preferably by means of an adjusting screw, such that the distance between the two guiding strips (20a, b, 22a, b) can be adjusted in order to form or release the connection, preferably the clamping connection, between the electrode (16, 18) and the frame element (12, 14), in particular the frame section (40, 42).

9. Production machine, in particular a bending and/or punching machine for processing, in particular shaping traversing workpieces with a wall-like basic body standing on a base, which has a front and a rear processing side, with at least one tool assembly for processing the workpieces, **characterised by** a welding device (10; 110, 210) according to one of the preceding claims.

10. Method for changing an electrode head of a welding device according to one of claims 1 to 8, wherein the electrode head comprises an electrode (16, 18; 116, 118; 216, 218) and a connected electrode holder (20, 22), wherein the electrode holder (20, 22), is configured such that it can be connected to the welding device, preferably by forming a clamping connection and wherein in the electrode head (36, 38; 136, 138; 236, 238), in particular in a part of the electrode holder (20, 22) and/or in the electrode (16, 18; 116, 118; 216, 218), line sections, in particular forward flow and backflow sections (54, 56) are formed which can be coupled automatically to a coolant circuit (32v, r, 34v, r, 50v, r, 52v, r) of the welding device during the mechanical connection of the electrode head (36, 38; 136, 138; 236, 238) to the welding device,
wherein the method comprises the following steps:
- switching off the welding device,
- interrupting the coolant inflow in at least one coolant circuit, which is assigned to an electrode to be exchanged, by closing a forward flow valve assigned to the coolant forward flow,
- introducing compressed air into the coolant circuit, in order to displace the remaining coolant in the direction of the coolant return flow, by opening a compressed air valve connected downstream of the forward flow valve,
- stopping the introduction of compressed air by closing the compressed air valve,
- detaching the connection between the electrode head to be changed and the assigned frame element of the welding device,
- removing the electrode head from the welding device,
- inserting and securing a replacement electrode head on the relevant frame element,
- introducing coolant into the coolant circuit,
- restarting the operation of the welding device.

## Revendications

1. Dispositif de soudage pour une machine-outil, en particulier une machine à estamper et/ou à cintrer pour garnir des pièces de support avec un métal de contact par soudage d'ébauches de métal de contact, qui sont détachées d'un matériau en bande, en particulier de fil (28), comprenant:
- un bâti de base,
- une paire d'électrodes (16, 18; 116, 118; 216, 218) avec une première électrode (18; 118; 218) mobile par rapport à une deuxième électrode (16; 116; 216) entre une position de retrait et une position de soudage, dans lequel la première et la deuxième électrodes (16, 18; 116, 118; 216, 218) sont disposées sur des premier et deuxième éléments respectifs du bâti (12, 14) en forme de pinces, qui peuvent se déplacer, en particulier pivoter, l'un par rapport à l'autre, et
- une alimentation de métal de contact avec un dispositif d'avance (28, 30) pour la fourniture d'ébauches de métal de contact à la paire d'électrodes (16, 18; 116, 118; 216, 218),
dans lequel il est prévu dans chaque élément de bâti (12, 14) une arrivée d'agent de refroidissement (32v, 34v, 50v, 52v) et un retour d'agent de refroidissement (32r, 34r, 50r, 52r) d'un circuit d'agent de refroidissement respectif pour le refroidissement de l'électrode respective (16, 18; 116, 118; 216, 218), **caractérisé en ce que**
au moins une des électrodes (16, 18; 116, 118; 216, 218), de préférence les deux électrodes, sont reliées de façon séparable, au moyen d'un porte-électrode respectif (20, 22), à un logement d'électrode de leur élément de bâti respectif (12, 14), de telle manière que le porte-électrode (20, 22) avec l'électrode (16, 18; 116, 118; 216, 218) puisse, en cas d'interruption du fonctionnement du dispositif de soudage, être enlevé du dispositif de soudage restant par ailleurs assemblé, de préférence fixé à la machine à estamper et/ou à cintrer,
dans lequel l'électrode et/ou le porte-électrode associé (20, 22) sont réalisés de telle manière que le circuit d'agent de refroidissement respectif soit automatiquement fermé lors de la réalisation de la liaison mécanique entre le porte-électrode (20, 22) et l'élément de bâti (12, 14),
dans lequel il est prévu sur les circuits d'agent de refroidissement un dispositif de vidange respectif ou commun, pour évacuer au moins partiellement l'agent de refroidissement se trouvant dans le circuit, et
dans lequel le dispositif de vidange comprend au moins une conduite pneumatique, qui est reliée par au moins une soupape à une arrivée d'agent de refroidissement ou aux arrivées d'agent de refroidissement, de telle manière que de l'air comprimé provenant d'une source d'air comprimé puisse être pompé dans le circuit d'agent de refroidissement.

2. Dispositif de soudage selon la revendication 1, **caractérisé en ce que** le dispositif de vidange comprend en outre une soupape d'arrivée associée à l'arrivée d'agent de refroidissement, qui est fermée lors de la vidange du circuit d'agent de refroidissement.

3. Dispositif de soudage selon l'une quelconque des revendications précédentes, **caractérisé en ce que** le porte-électrode (20, 22) peut être ou est assemblé par emboîtement avec le logement d'électrode des éléments de bâti (12, 14).

4. Dispositif de soudage selon la revendication 3, **caractérisé en ce que** le porte-électrode (20, 22) et le logement d'électrode sur les éléments de bâti (12, 14) sont réalisés de telle manière qu'un assemblage par serrage soit réalisé entre le porte-électrode (20, 22) et l'élément de bâti (12, 14).

5. Dispositif de soudage selon l'une quelconque des revendications précédentes, **caractérisé en ce que** le porte-électrode (20, 22) présente deux règles de guidage (20a, b; 22a, b; 120a, b; 122a, b; 220a, b; 222a, b) reliées l'une à l'autre et disposées à distance réglable l'une de l'autre.

6. Dispositif de soudage selon la revendication 5, **caractérisé en ce que** les règles de guidage (20a, b; 22a, b; 120a, b; 122a, b; 220a, b; 222a, b) comprennent entre elles, à l'état monté de l'électrode, une partie de bâti (40, 42) du logement d'électrode.

7. Dispositif de soudage selon la revendication 6, **caractérisé en ce que** les règles de guidage (20a, b; 22a, b) sont reliées l'une à l'autre par au moins un boulon (20c, 22c), dans lequel le boulon (20c, 22c) est logé, à l'état monté de l'électrode, dans une ouverture correspondante respective (40a, 42a) dans la partie de bâti (40, 42).

8. Dispositif de soudage selon la revendication 7, **caractérisé en ce que** le boulon (20c, 22c) est réalisé de telle manière qu'il soit réglable au moyen d'un élément de réglage (44, 46) prévu sur une des règles de guidage (20a, 22a), de préférence au moyen d'une vis de réglage, de telle manière que la distance entre les deux règles de guidage (20a, b; 22a, b) soit réglable afin de réaliser ou de libérer l'assemblage, de préférence l'assemblage par serrage, entre l'électrode (16, 18) et l'élément de bâti (12, 14), en particulier la partie de bâti (40, 42).

9. Machine-outil, en particulier machine à estamper et/ou à cintrer, pour l'usinage, en particulier la déformation de pièces en mouvement, avec un corps de base en forme de paroi dressé sur une fondation, qui présente un côté d'usinage avant et un côté d'usinage arrière, avec au moins un groupe d'outils pour l'usinage des pièces, **caractérisée par** un dispositif de soudage (10; 110; 210) selon l'une quelconque des revendications précédentes.

10. Procédé pour échanger une tête d'électrode d'un dispositif de soudage selon l'une quelconque des revendications 1 à 8, dans lequel la tête d'électrode comprend une électrode (16, 18; 116, 118; 216, 218) et un porte-électrode (20, 22) relié à celle-ci, dans lequel le porte-électrode (20, 22) est réalisé de telle manière qu'il puisse être assemblé au dispositif de soudage, de préférence en réalisant un assemblage par serrage, et dans lequel sont réalisés, dans la tête d'électrode (36, 38; 136, 138; 236, 238), en particulier dans une partie du porte-électrode (20, 22) et/ou dans l'électrode (16, 18; 116, 118; 216, 218), des parties de conduite, en particulier des parties d'arrivée et de retour (54, 56), qui peuvent être couplées automatiquement avec un circuit d'agent de refroidissement (32v, r, 34v, r, 50v, r, 52v, r) du dispositif de soudage lors de la liaison mécanique de la tête d'électrode (36, 38; 136, 138; 236, 238) avec le dispositif de soudage,
dans lequel le procédé comprend les étapes suivantes:
- mise hors service du dispositif de soudage,
- interruption du flux d'agent de refroidissement dans au moins un circuit d'agent de refroidissement, qui est associé à une électrode, par fermeture d'une soupape d'arrivée associée à l'arrivée d'agent de refroidissement,
- introduction d'air comprimé dans le circuit d'agent de refroidissement, afin de chasser l'agent de refroidissement résiduel en direction du retour d'agent de refroidissement, par ouverture d'une des soupapes d'air comprimé montées en aval de la soupape d'arrivée,
- arrêt de l'introduction d'air comprimé par fermeture de la soupape d'air comprimé,
- libération de l'assemblage entre la tête d'électrode à échanger et l'élément de bâti associé du dispositif de soudage,
- enlèvement de la tête d'électrode du dispositif de soudage,
- placement et fixation d'une tête d'électrode de remplacement sur l'élément de bâti correspondant,
- introduction d'agent de refroidissement dans le circuit d'agent de refroidissement,
- reprise du fonctionnement du dispositif de soudage.
